# EUROPEAN PATENT APPLICATION

(11) **EP 4 711 346 A1**
(43) Date of publication of application: **18.03.2026**
(21) Application number: 25150946.9
(22) Date of filing: 09.01.2025
(51) Int. Cl.: C04B 20/04

(54) **COMPOSITIONS FOR SUPPLEMENTARY CEMENTITIOUS MATERIAL AND METHODS OF MAKING**

(30) Priority: 16.09.2024 US 202418886668
(71) Applicant: EnviCore Inc., Calgary, Alberta T2A 6K4 (CA)
(72) Inventor: PANDEY, Aseem, Calgary, Alberta T2A 6K4 (CA); SHAMIM, Shahrukh, Calgary, Alberta T2A 6K4 (CA)
(74) Representative: van Breda, Jacobus

(57) **Abstract**

A method for producing supplementary cementitious material ("SCM"). The method comprises: contacting an input stream with a mechano-thermal activation aid; thermally treating the input stream to form a thermally treated input stream; and cooling the thermally treated input stream and obtaining supplementary cementitious material. The method may further comprise carbonating the thermally treated input stream. The method may further comprise modification of a network structure by the mechano-thermal activation aid. A composition comprising a calcium silicate hydrate bond; a supplementary cementitious material; and a mechano-thermal activation aid. The composition may further comprise a carbonate. The composition may further comprise a biomass.

## Description

### CROSS-REFERENCE TO RELATED APPLICATIONS

This application is a continuation-in-part application bypass of PCT Patent Application No. PCT/CA2023/051157, entitled "Compositions for Supplementary Cementitious Material and Methods of Making", filed on August 31, 2023, which claims priority to and the benefit of the filing of U.S. Provisional Patent Application No. 63/456,636, entitled "Compositions for Supplementary Cementitious Material and Methods of Making", filed on April 3, 2023, and the specification and claims thereof are incorporated herein by reference.

### BACKGROUND OF THE INVENTION

### Field of the Invention (Technical Field):

The present invention relates to methods of producing and compositions comprising supplementary cementitious material ("SCM").

### Background:

Concrete has been a crucial building material for thousands of years and continues to be widely used today. The binding component of concrete, cement, enables it to harden into a composite material at ambient temperatures. While numerous binder chemistries have been used to make concrete, Portland cement and its variants have been the primary binder for nearly 200 years. Unfortunately, Portland cement production is a highly CO₂-intensive process and is responsible for approximately 8% of global anthropogenic CO₂ emissions. Cement demand is projected to increase by 12% to 23% by 2050, but the need for complete decarbonization of the global economy is at odds with this growth in demand. There is therefore a demand to reduce the specific CO₂ emissions of cement production, especially since production volume is increasing.

One approach to reducing CO₂ emissions from cement is to develop blends with supplementary cementitious materials that can replace Portland cement in a concrete mix. These materials include byproduct ashes from combustion, such as granulated blast furnace slag ("GGBFS") and coal fly ash; calcined clays such as metakaolin; and natural pozzolans such as volcanic ash. However, the supply of these materials is limited in geography and volume compared to the enormous demand for cement and their suitability as cementitious reagents varies between production plants and over time.

Fly ash, for example, is a partially glassy aluminosilicate by-product of coal combustion that is frequently used in hydraulic cement mixes to improve flowability and create a pozzolanic reaction that improves concrete properties. However, only certain coal and combustion processes produce fly ash of an acceptable quality for use in concrete. GGBFS, on the other hand, is a glassy CaO-SiO₂ by-product of iron production that has numerous advantageous properties when incorporated into concrete, but its supply is limited due to the small number of operating blast furnaces.

Natural pozzolans can be effective SCM, but they require mining of nonrenewable resources and often need significant processing such as calcining to enhance reactivity. Therefore, there is a need for an engineered cementitious reagent with low or zero process CO₂ emissions that can be produced ubiquitously from globally abundant input materials; is reactive in cementitious systems; and whose production location could be chosen based on market needs. This would allow for a reduction in CO₂ emissions in Portland cement production while providing a cementitious reagent that can be reliably produced and supplied to meet global demand.

Mineral tailings, construction waste, clays, landfilled/bottom ash and mineral waste are all potential sources of raw materials for the production of SCM. These waste streams often contain minerals such as silica, alumina, and iron, which are key components of traditional SCM like fly ash and slag. By extracting these minerals from waste streams and processing them to meet the required specifications, they can be used as a sustainable alternative to traditional SCM. Additionally, the use of waste materials as raw materials for SCM can provide environmental benefits such as reduced waste disposal, decreased energy consumption, and lower greenhouse gas emissions. With the increasing demand for lowcarbon construction materials, utilizing waste materials as a resource for SCM production can help meet sustainability goals and reduce the environmental impact of the cement and concrete industry.

SCMs can be pozzolanic or latent hydraulic. Pozzolanic SCM such as fly ash reacts with calcium hydroxide and water at high pH to form compounds containing C-S-H bonds. Fly ash is an amorphous glass which thereby reacts with calcium hydroxide and water to form C-S-H bonds. Pozzolanic SCM, such as fly ash, silica fume, and ground granulated blast furnace slag, react with calcium hydroxide to form additional C-S-H gel through a pozzolanic reaction, which occurs between the pozzolan and the calcium hydroxide in the presence of water.

Latent hydraulic SCM such as slag react with water to form C-S-H bonds and do not need calcium hydroxide. For example, Portland cement forms a C-S-H gel through a hydraulic reaction, which occurs between the Portland cement and water.

Inert materials with a high degree of crystallinity do not react with calcium hydroxide and water. Inert fillers such as tailings do not react with calcium hydroxide; therefore, do not show any cementitious activity. Therefore, SCM should have reactivity when mixed with calcium hydroxide and water and participate in the C-S-H bond formation. In certain cases, the SCM is inert but can still pass an ASTM C 618 strength activity requirement due to filler effects. Therefore, inert materials such as tailings and mineral wastes need to be activated enough so that they react with calcium hydroxide and/or water to form C-S-H bonds which impart hardening properties.

Even though inert fillers are present in abundance, they lack the reactivity to work as an SCM. Therefore, there is a need to manufacture reactive SCMs from abundant input material, e.g., mineral tailings, to reduce the overall greenhouse gas ("GHG") emission from construction materials manufacturing, including cement production, and to reduce the environmental impact of waste materials such as mineral tailings. There is also a need to reduce the energy requirements for preparing SCM.

Crystalline minerals, such as tailings, aggregates, dust, sand, clays etc., are not typically used as supplementary cementitious materials (SCMs) in concrete because they do not exhibit pozzolanic or hydraulic properties. Crystalline materials do not react with the calcium hydroxide in the cement paste to form additional C-S-H gel. As a result, they do not provide the same benefits as SCMs, and are not typically used as such in concrete.

One common approach to converting crystalline materials into SCMs is through thermal activation, which involves heating the material to a high temperature to induce chemical changes that create reactive phases. For example, calcination of kaolin clay can produce metakaolin, which is a pozzolanic material that can be used as an SCM in concrete. However, thermal activation is normally carried out at high temperatures, above 700 °C for clays and above 1000 °C for a silicate and/or an aluminosilicate to induce structural changes in the crystalline network to impact amorphicity.

While traditional SCM such as fly ash and slag have been valuable in improving the sustainability and performance of concrete, the need for more consistent, environmentally friendly, and cost-effective alternatives is driving the search for new and innovative SCM. Waste minerals such as tailings, construction waste, clays, bottom/landfilled ash and/or aggregates dust can be a viable solution to address the significant challenges related to the global availability of SCM in large quantities. This approach not only offers a substantial source of sustainable building materials but also helps to mitigate the environmental impact of both the mining and construction industries.

The present invention discloses the production of SCM from globally abundant input material to lower the environmental footprint of the cement and mining industry. The present invention also produces SCM at temperatures below 1000 °C to reduce the energy requirements and avoid carbonate decomposition for preparing SCMs. The invention also relates to an additional carbonation step to sequester CO₂ at faster rates due to structural defects and higher reactivity created after mechano-thermal and chemical treatment. Moreover, the carbonated SCMs may exhibit lower water demand of the mortar after the carbonation process.

### BRIEF SUMMARY OF THE INVENTION

Embodiments of the invention relate to a method for producing supplementary cementitious material, the method comprising: contacting an input stream comprising a crystalline and/or poorly crystalline lattice with a mechano-thermal activation aid; thermally treating the input stream to form a thermally treated input stream; sequestering an ion; disrupting the input stream lattice; and cooling the thermally treated input stream. In another embodiment, the method further comprises carbonating the thermally treated input stream.

In another embodiment, the method further comprises an oxidizing environment. In another embodiment, the method further comprises a reducing environment. In another embodiment, the method further comprises an inert environment.

In another embodiment, the method further comprises carbonating the thermally treated input stream. In another embodiment, the method further comprises cogrinding the input stream and the mechano-thermal activation aid. In another embodiment, the method further comprises pelletizing the input stream and the mechano-thermal activation aid. In another embodiment, the method further comprises milling the thermally treated input stream. In another embodiment, the method further comprises reducing a vitrification temperature.

In another embodiment, the mechano-thermal activation aid comprises a biomass. In another embodiment, the method further comprises pyrolyzing the biomass. In another embodiment, the input stream comprises an aluminosilicate. In another embodiment, the mechano-thermal activation aid comprises an alkali metal ion. In another embodiment, the mechano-thermal activation aid comprises an alkaline earth metal ion. In another embodiment, the method further comprises contacting the aluminosilicate with an alkali metal ion. In another embodiment, the method further comprises contacting the aluminosilicate with an alkaline earth metal ion.

In another embodiment, thermally treating the input stream comprises heating the input stream and mechano-thermal activation aid to a temperature of about 400 °C to about 1000 °C. In another embodiment, the input stream comprises recycled concrete aggregate. In another embodiment, the input stream comprises kaolinite rich clay. In another embodiment, the input stream comprises recycled concrete fines.

Further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

### BRIEF DESCRIPTION OF THE SEVERAL VIEWS OF THE DRAWINGS

The accompanying drawings, which are incorporated into and form a part of the specification, illustrate one or more embodiments of the present invention and, together with the description, serve to explain the principles of the invention. The drawings are only for the purpose of illustrating one or more embodiments of the invention and are not to be construed as limiting the invention. In the drawings:
Fig. 1 is a process flow diagram showing production of SCM (without carbonation) from waste minerals comprising silicate and/or aluminosilicate, according to an embodiment of the present invention;
Fig. 2 is a table showing reactivity in terms of heat release for SCM produced from mineral tailing and aggregate fines versus control samples, according to an embodiment of the present invention;
Fig. 3 is a table showing the strength activity index for SCM (with and without carbonation) prepared with various sources after 20% cement replacement in a mortar mix as per ASTM C618, according to an embodiment of the present invention;
Fig. 4 shows the synergistic effect of biomass, alkali metals, and aluminosilicates during thermal treatment, according to an embodiment of the present invention; and
Fig. 5 shows a picture of SCMs prepared through pelletization of feedstock and activation aids before and after thermal treatment, according to an embodiment of the present invention.

### DETAILED DESCRIPTION OF THE INVENTION

Embodiments of the present invention relate to a method for manufacturing an SCM, the method comprising: contacting an input material with a mechano-thermal activation aid; thermally treating the input material to activate the input material; and milling the activated input material to form a supplementary cementitious material. In some embodiments, after thermal activation the SCM can be carbonated in a wet state with an addition of a dispersing agent to permanently sequester CO₂ in form of carbonates in SCM after thermal activation. SCM carbonation may also reduce the water demand during SCM production. After carbonation, the produced SCM may be dried and ball milled to form final supplementary cementitious material for use in concrete mix. Carbonation may be performed in a dry state wherein the SCM is contacted with source of CO₂ gas. Contact may occur in a rotating cylinder, fluidized bed, a grinding mill, or a combination thereof. The extent of carbonation depends on the active alkali or alkali earth metal in the SCM. The active alkali or alkali earth metal may include, but is not limited to, sodium, potassium, calcium, magnesium, or a combination thereof. In certain embodiments, where biomass is used as an activation aid, char produced due to biomass pyrolysis may sequester CO₂. SCMs produced by mechanothermal treatment may increase in the kinetics of carbonation. Without being limited to a particular theory, the increased kinetics may be due to a higher degree of disordered lattice structure and higher surface area.

Embodiments of the present invention relate to a method for producing cementitious reagent, the method comprising: contacting an input material with a mechanothermal activation aid; thermally treating the input material to activate the input material; milling the activated input material to form a supplementary cementitious material; contacting the supplementary cementitious material with calcium hydroxide and a base to form a supplementary cementitious material mixture; curing the supplementary cementitious material mixture; and contacting the supplementary cementitious material mixture with a cement mix. Curing the supplementary cementitious material mixture may be performed to test the reactivity of the supplementary cementitious material mixture. Contacting the supplementary cementitious material mixture with a cement mix may comprise replacing the cement with supplementary cementitious material in a mortar mix.

Embodiments of the present invention relate to a composition, the composition comprising: activated input material; a mechano-thermal activation aid; and a calcium silicate hydrate bond when used in a mortar and/or concrete mix. The composition may further comprise carbonates derived from sequestered CO₂.

Embodiments of the present invention relate to methods for producing SCM from globally abundant and locally available input material including, but not limited to, a mineral waste stream, mineral tailings, construction waste, clay, sand, or a combination thereof. The present invention also relates to methods for manufacturing SCM by vitrification using a mechano-thermal activation aid. The SCM may be used to replace Portland cement in a concrete mix. For example, up to 20% of Portland cement may be replaced by SCM in a concrete mix depending on the reactivity of the SCM.

The term "ASTM C618" as used herein is the standard specification for coal fly ash and raw or calcined natural Pozzolan for use in concrete according to ASTM International Standards.

The term "fines" is defined herein as finely crushed or powdered material (such as ore).

The term "tailings" or "mineral tailings" is defined herein as materials left over after the process of separating a valuable fraction from the uneconomic fraction of a material.

The term "supplementary cementitious material" or "SCM" is defined herein as a material and/or compound added to concrete to improve its performance and reduce its environmental impact. SCM reacts with the calcium hydroxide or portlandite present in the cement paste to form calcium silicate hydrate (C-S-H) gel in addition to the calcium silicate hydrate (C-S-H) formed from the cement.

The term "mechano-thermal activation aid" is defined herein as a material and/or compound that reduces the temperature at which a material vitrifies and/or acts as a network modifier in the Si-O, AI-O, and/or Al-Si-O matrix to modify the network structure. The mechano-thermal activation aid may improve the reactivity of the material.

The term "vitrification" is defined herein as converting into glass or an amorphous substance by heat and fusion.

The term "input material" is defined herein as a material and/or compound from which SCM may be derived. Input material includes, but is not limited to, mineral tailings, including but not limited to, zinc, lead, nickel, and copper tailings, or a combination thereof; aggregate fines; clays including, but not limited to, muscovite, illite, kaolinite clay, blue clay, or a combination thereof; concrete aggregate including, but not limited to, recycled concrete aggregate, recycled concrete fines, or combination thereof; sand including, but not limited to, silica sand, bedding sand, or a combination thereof; mature fine tailings, shale ash, coal bottom ash, landfilled ash, or a combination thereof; natural pozzolans including, but not limited to, zeolites, volcanic ash, or a combination thereof.

The term "thermally treat" is defined herein as applying heat to material and/or compound.

The term "sources" as used herein may refer to a first compound from which a second compound is derived through a chemical change. For example, a source of sodium oxide may be sodium carbonate of which about 58% is sodium oxide. Sodium carbonate may be converted to sodium oxide by a chemical change.

The term "environment" as here used herein refers to a physical and/or chemical condition or plurality of conditions that affects a reaction. For example, an oxidizing environment may be a reagent included in a chemical reaction that assists with or performs an oxidation reaction.

The method may enhance the strength, durability, and other properties of concrete. The method may allow concrete to be manufactured at lower cost and with lower CO₂ emission.

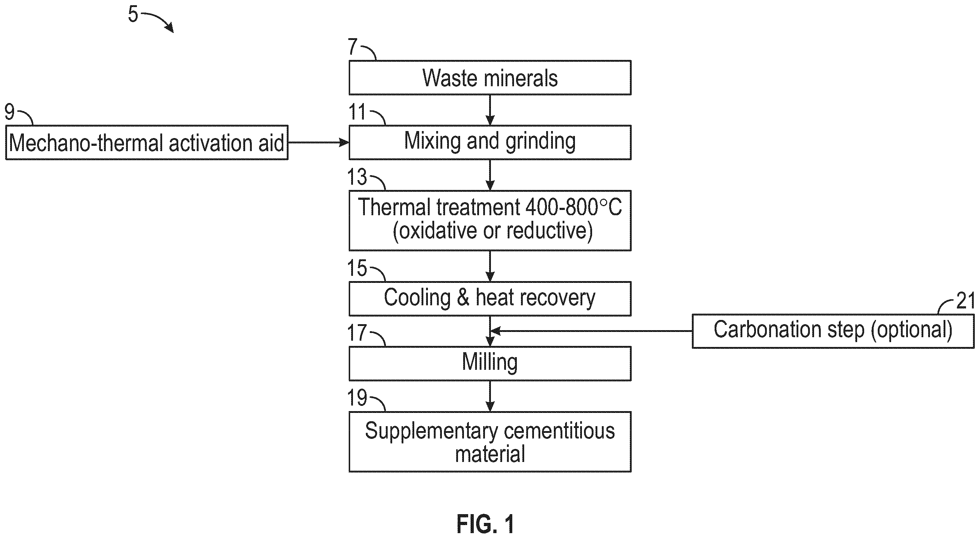

Turning now to the figures, Fig. 1 shows the general schematic process for production of SCM from an input stream comprising a silicate and/or an aluminosilicate. All the SCMs show heat release above 100 Joules/g ("J/g") which clearly indicates that the material is pozzolanic in nature. For the control samples, the heat release is very low indicating that the materials are inert. As shown in process 5, input material 7 and mechanothermal activation aid 9 are mixed and/or ground 11 and subjected to thermal treatment **13** followed by cooling **15** and milling **17** to form SCM **19.** Optionally, the cooled thermally activated input stream may undergo carbonation step **21.**

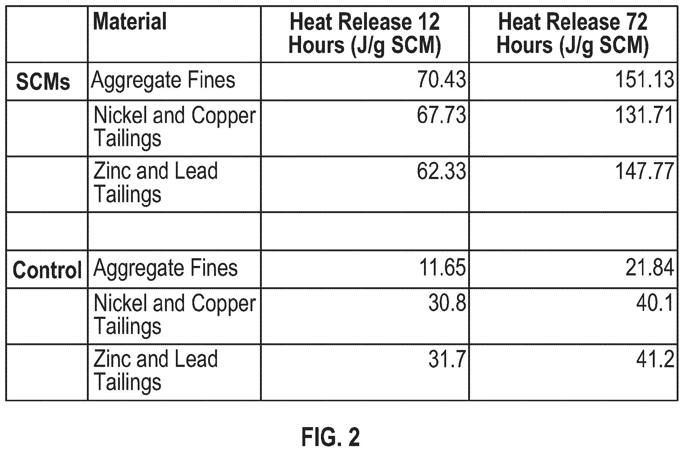

Fig. 2 shows reactivity in terms of heat release for SCM produced from zinc and lead tailings, nickel and copper tailings, and aggregate fines versus control samples.

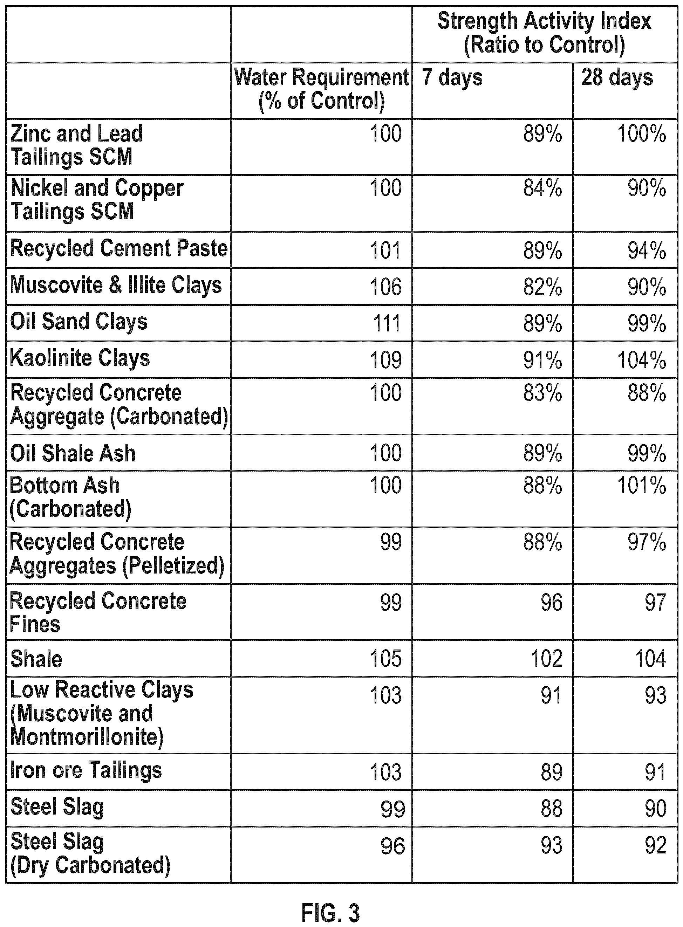

Fig. 3 shows the strength activity index for SCM prepared with various sources after 20% cement replacement in a mortar mix as per ASTM C618.

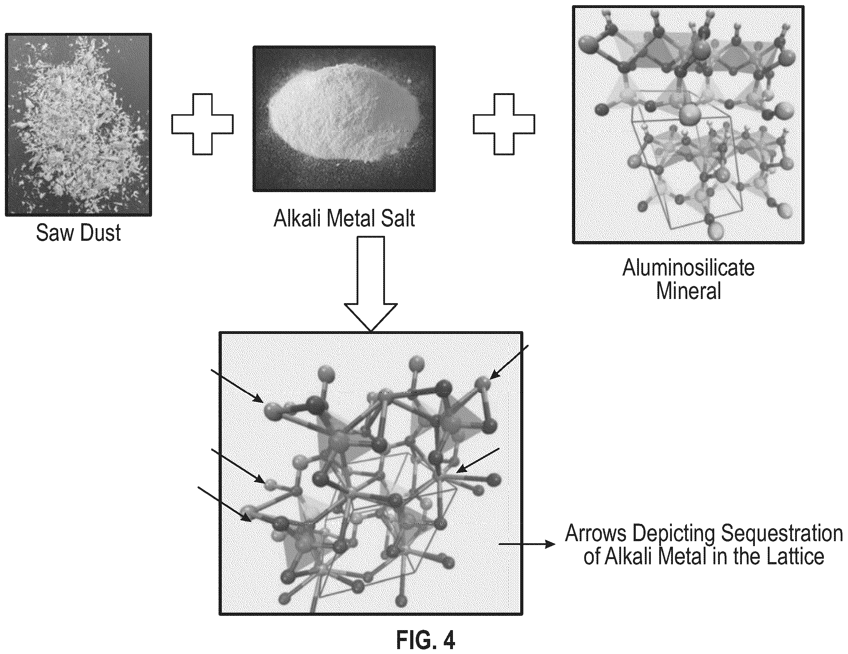

Fig. 4 shows the synergistic effect of biomass, alkali metals, and aluminosilicates during thermal treatment.

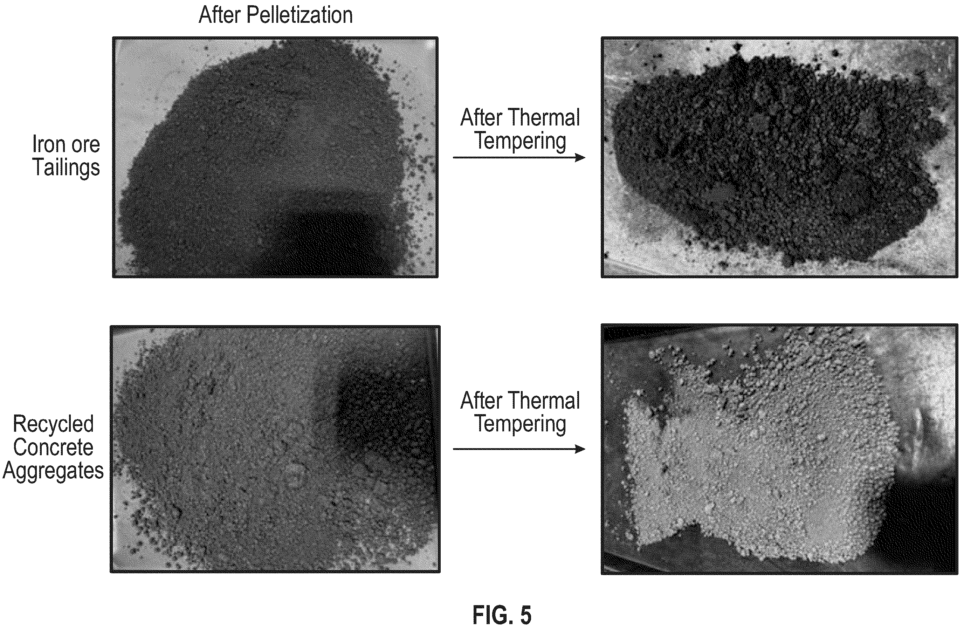

Fig. 5 shows a picture of SCMs prepared through pelletization of feedstock and activation aids before and after thermal treatment.

A mechano-thermal activation aid may reduce the vitrification and/or glass phase formation temperature for input material including, but not limited to, inert material, tailings, crystalline aluminosilicate, silicate, construction waste, aggregate, aggregate dust, silica sand, or a combination thereof. Contacting the feed with the mechano-thermal activation aid during vitrification and/or glass phase formation may reduce thermal activation temperature of input material to induce chemical changes that create reactive phases and form a reactive material. Once activated, the reactive material may react with calcium hydroxide to form a CS-H gel through a pozzolanic reaction and form an SCM. The mechano-thermal activation aid may act as a network modifier in the Si-O, AI-O, and/or Al-Si-O matrix to modify the network structure and may improve the reactivity of the material.

The method may use a mechano-thermal activation aid to reduce the temperature required for dehydroxylation, modify the network structure of Si and O, Al and Si, Si, AL and O, improve the efficiency of the process, and promote the removal of hydroxyl groups from the clay mineral layers. The clay minerals may be sourced from tailings waste, kaolin deposits, illite, smectite clays, mixed layer clays, muscovite, or a combination thereof. Some sources of waste clays include, but are not limited to, oil sand tailings, coal tailings, or a combination thereof.

SCM may be prepared from input material by thermally activating the input material. The activation may occur at lower temperatures by contacting the input material with a mechano-thermal activation aid. The temperature may be less than about 1000 °C, about 1000 °C to about 400 °C, about 950 °C to about 550 °C, about 900 °C to about 600 °C, about 850 °C to about 650 °C, about 800 °C to about 700 °C, or about 400 °C. The thermal activation of input material may be carried out in an oxidizing environment; however, thermal activation may also be carried out in a reducing environment, or produce an anoxic environment by purging with CO₂, H₂, CO or inert gases including, but not limited to nitrogen and argon, helium, neon, krypton, xenon, and radon. Reduction or the production of an anoxic environment may lower the temperature required for vitrification. Reducing agents including, but not limited to thiourea, ascorbic acid, sodium sulfite, oxalic acid, tannic acid, citric acid, or a combination thereof, may be contacted and/or mixed with the inert gas to produce reducing conditions. The inert gas and/or reducing agents may be mixed in a kiln or other vessel in the presence of an input material to reduce the input material.

Input material comprising oxides of silica and/or an aluminosilicate may be a source of SCM. The oxides of silica and/or an aluminosilicate may include, but are not limited to, waste tailings, construction waste materials, sand, or a combination thereof. The oxides of silica and/or an aluminosilicate may be rich sources of oxides of silicon or aluminum but may be highly crystalline in nature. Crystalline materials, however, do not exhibit pozzolanic or hydraulic properties, and therefore do not react with the calcium hydroxide in the cement paste to form additional C-S-H gel. As a result, they do not provide the same benefits as an SCM and must be converted to an SCM according to the methods of the present invention.

Silicate minerals may be difficult to vitrify due to their high melting temperatures and tendency to crystallize under high temperatures. For example, pure silica sand vitrifies at about 1700 °C, and silicate minerals such as feldspar have a vitrification temperature of about 1100-1200 °C. In general, silicate minerals vitrify above 1000 °C. The method may comprise using a mechano-thermal activation aid to reduce the temperature required for vitrification, modify the network structure, and/or prevent growth of crystals while cooling. The mechanothermal activation aid may lower the melting point of silicate minerals by forming a eutectic mixture with them. This mixture may have a lower melting point than the individual components, which may allow the material to melt and vitrify at lower temperatures. Vitrification in the presence of a mechano-thermal activation aid may produce an SCM using globally abundant input material and may provide superior performance properties needed to meet the demands of the construction industry while reducing the overall carbon footprint associated with cement production.

Clay minerals are naturally occurring minerals comprising layers of metaloxygen (such as aluminum-oxygen) octahedral sheets, and silicon-oxygen tetrahedral sheets. The sheets may be held together by weak van der Waals forces and hydrogen bonding. The clay minerals may comprise hydroxyl groups (-OH) located at the edges of the layers, which are responsible for the ability of clays to adsorb water and other polar molecules. Dehydroxylation is the process of removing the hydroxyl groups from the edges of the clay mineral layers. This process may occur through thermal treatment, wherein the clay minerals are heated to high temperatures (for example, to above 600 °C for kaolinitic clays). During the thermal treatment process, the hydroxyl groups may be broken down into water (H₂O) and hydroxyl radicals (·OH), which then react with neighboring hydroxyl groups, leading to their removal. The hydroxylated clay minerals may be amorphous in nature and act as a source of SCM.

The method may comprise contacting input material with a mechano-thermal activation aid. The mechano-thermal activation aid may be contacted with input material to promote vitrification of crystalline silicate and/or an aluminosilicate. The mechano-thermal activation aid may be an alkali mechano-thermal activation aid including, but not limited to, sodium oxide, potassium oxide, lithium oxide, barium oxide, and their respective sources, or a combination thereof. The mechano-thermal activation aid may include, but is not limited to, sodium oxide and its sources including, but not limited to, sodium carbonate, sodium hydroxide, sodium chloride, sodium silicate, sodium nitrate, waste glass cullet, or a combination thereof; potassium oxide and its sources including, but not limited to, potassium carbonates, potassium hydroxide, potassium chloride, potassium silicate, potassium nitrate, or a combination thereof; lithium oxide and its sources including, but not limited to, lithium carbonate, lithium hydroxide, lithium chloride, lithium silicate, or a combination thereof; barium oxide and its sources including, but not limited to, barium carbonate, barium hydroxide, barium nitrate, or a combination thereof; calcium oxide and its sources including, but not limited to, limestone, dolomite, gypsum, calcium chloride calcium hydroxide, or a combination thereof; magnesium oxide and its sources including, but not limited to, magnesite, brucite, magnesium sulfates, or a combination thereof; an aluminate including, but not limited to, aluminum oxide, aluminum hydroxide, sodium aluminate, or a combination thereof; a borate including, but not limited to, boric acid, boron oxide, borax, colemanite or ulexite ore or a combination thereof; a fluoride including, but not limited to, potassium fluoride sodium fluoride calcium fluoride, or a combination thereof; fluoroborate; a phosphate including, but not limited to, a phosphate based on P₂O₅ content, calcium diphosphate, sodium hexametaphosphate, or a combination thereof; or a combination thereof; an iron oxide including, but not limited to, hematite, magnetite, or a combination thereof; a source of biomass including, but not limited to, wood, saw dust, coffee beans/grounds, rice husk, or a combination thereof.

The synergistic effect of biomass pyrolysis and alkali and/or alkaline earth metals including, but not limited to, sodium, potassium, calcium, or a combination thereof, may enhance the reactivity of minerals such as SCMs. An alkali or alkaline earth metal ion may be transferred to the surface of an aluminosilicate. The transfer may occur during the thermal treatment of the aluminosilicates, biomass, alkali and/or alkaline earth metal sources, or a combination thereof. A mobile alkali or alkaline earth metal ion may be sequestered into an aluminosilicate. The sequestration of the mobile alkali or alkaline earth metal ion may occur by reaction with the aluminosilicate and may form an alkali aluminosilicate and/or alkaline earth aluminosilicate. The alkali aluminosilicate and/or alkaline earth aluminosilicate may include, but is not limited to, KAlSi₃O₈, NaAlSi₃O₈, KAlSiO₄, NaAlSiO₄, or a combination thereof. The sequestration of the alkali and/or alkaline earth metal ion may be into the crystal structure of aluminosilicates. Sequestration into the crystal structure of the aluminosilicate may disrupt the lattice of the aluminosilicate, resulting in a reactive amorphous material that acts as a supplementary cementitious reagent. In addition, pyrolysis of biomass may result in an additional heat input with a lower CO₂ footprint. The pyrolysis of biomass may reduce the net overall CO₂ footprint of the process.

The mechano-thermal activation aid may be contacted with the input material in the presence of heat and/or high temperature. The input material and temperature may be chosen based on the input material composition. For example, for kaolinitic rich clay minerals, an alkali including, but not limited to, sodium carbonate, may be used at a temperature below about 600 °C, about 600 °C to about 0 °C, about 550 °C to about 50 °C, about 500 °C to about 450 °C, about 400 °C to about 350 °C, or about 0 °C. For illite, muscovite, mixed and smectite-rich clays, an alkali mechano-thermal activation aid may be combined and/or used simultaneously with a sodium, potassium, borate, aluminate, biomass, or a combination thereof, to improve the vitrification process. For example, an alkali may be contacted with a borate and/or a biomass to reduce vitrification temperature and produce SCM from a silicate and/or aluminosilicate-rich mineral. The mechano-thermal activation aid may be co-grinded in a mill to ensure dispersion; mechanical activation during the griding stage; and/or an increase in surface area required for efficient activation during the thermal treatment stage. The fineness of the mixture of aluminosilicates input stream and mechano-thermal activation aid may determine the efficiency of the thermal treatment. Particle size may affect the burnability of the feed stream. The input material and mechano-thermal activation aid may be ground to a size of less than about 200 µm, about 200 µm to about 10 µm, about 180 µm to about 20 µm, about 160 µm to about 40 µm, about 140 µm to about 60 µm, about 120 µm to about 80 µm, or about 10 µm. The feed stream after grinding may be pelletized with the addition of water. The formation of pellets may reduce dust during thermal treatment in a rotary kiln and may create a reducing environment in the pellets. The reducing environment may further enhance the reactivity of the materials as SCMs.

The SCM may be pozzolanic and may react with calcium hydroxide (Ca(OH)₂) in the presence of water to form a cementitious compound. The cementitious compound may be a reactive amorphous aluminosilicate material that may be used for geopolymerization to form a geopolymer. A geopolymer is an inorganic material that may be formed from the reaction of aluminosilicate precursors with an alkaline solution, typically a solution of sodium or potassium hydroxide or silicate. Cement produced from a geopolymer may occur at lower temperatures and with lower carbon emissions than traditional Portland cement. The reaction between the aluminosilicate precursor and the alkaline solution may create a threedimensional network of tetrahedral units that are linked by covalent bonds, forming a stable and durable material. The geopolymers may have properties similar to those of traditional cement including, but not limited to, high compressive strength, low permeability, good fire resistance, or a combination thereof; and may be more environmentally friendly and chemically resistant compared to traditional cement.

The reactivity of the SCM may be measured by contacting SCM with Ca(OH)₂ and an alkaline solution of 0.5 M KOH. The resulting mixture may be cured at a temperature of at least about 45 °C, about 45 °C to about 55 °C, about 47 °C to about 53 °C, 49 °C to about 51 °C, or about 50 °C. The SCM is pozzolanic and formed from cementitious products with calcium hydroxide if the SCM hardens after 24 hours.

SCM reactivity may be measured as heat released in model systems comprising calcium hydroxide, an alkaline solution of KOH, and an SCM. The heat release for reactive SCM may be at least about 80 J/g, about 80 J/g to about 200 J/g, about 90 J/g to about 190 J/g, about 100 J/g to about 180 J/g, about 110 J/g to about 170 J/g, about 120 J/g to about 160 J/g, about 130 J/g to about 150 J/g, or about 200 J/g of SCM.

SCM may be used to replace cement in a mortar mix. The replacement may be done as outlined in ASTM C618. The amount replaced may be at least about 10%, about 10% to about 40%, about 15% to about 35%, about 20% to about 30%, or about 40% of the mortar mix.

The compressive strength of the materials may be measured and compared against 100% cement control to measure the strength activity index ("SAI"). As per ASTM C618, materials exhibiting over 75% SAI at 20% replacement levels are classified as SCM.

The method may comprise contacting the SCM with calcium hydroxide. The method may also comprise contacting the SCM with a base. The base may include, but is not limited to, KOH, NaOH, LiOH, CsOH, other strong base, other ionic base, or a combination thereof. The method may further include contacting the SCM with calcium hydroxide and a base to form an activated SCM mixture. The SCM mixture may be cured at a temperature of at least about 40 °C, about 40 °C to about 60 °C, about 42 °C to about 58 °C about 44 °C to about 56 °C about 46 °C to about 54 °C, about 48 °C to about 52 °C, or about 60 °C. The SCM mixture may be cured for at least about 12 hours, about 12 hours to about 48 hours, about 16 hours to about 44 hours, about 20 hours to about 40 hours, or about 24 hours to about 36 hours, about 28 hours to about 32 hours, or about 48 hours.

Embodiments of the present invention provide a technology-based solution that overcomes existing problems with the current state of the art in a technical way to satisfy an existing problem for reducing CO₂ emissions during cement production. Embodiments of the present invention achieve important benefits over the current state of the art, such as reduced cement production emissions using readily available source materials; and cementitious material production at temperatures below 1000 °C. Some of the unconventional steps of embodiments of the present invention include the addition of mechano-thermal activation aids to cause vitrification of feed materials to produce SCM.

### Industrial Applicability:

The invention is further illustrated by the following non-limiting examples.

### Example 1

SCM was prepared from zinc and lead tailings. Zinc and lead tailings were ground with 3% by weight solid sodium carbonate and 5% by weight solid boron oxide and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Zinc tailings thermally treated at 700 °C without the mechanothermal activation aid did not harden after one day of curing. This showed that thermal treatment alone was unable to cause vitrification of the tailings sample.

### Example 2

SCM was prepared from zinc and lead tailings. Zinc and lead tailings were ground with 2% by weight solid sodium carbonate and 3% by weight solid boron oxide and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity.

### Example 3

SCM was prepared from nickel and copper tailings. Nickel and copper tailings were ground with 3% by weight solid sodium carbonate and 5% by weight solid boron oxide and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Nickel and copper tailings thermally treated at 700 °C without the mechano-thermal activation aid did not harden after one day of curing. This showed that thermal treatment alone was unable to cause vitrification of the tailings sample.

### Example 4

SCM was prepared from nickel and copper tailings. Nickel and copper tailings were ground with 2% by weight solid sodium carbonate and 3% by weight solid boron oxide and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity.

### Example 5

SCM was prepared from nickel and copper tailings. Nickel and copper tailings were ground with 7% by weight solid sodium carbonate and 3% by weight solid boric acid and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity.

### Example 6

SCM was prepared from copper tailings. Copper tailings were ground with 3% by weight solid sodium carbonate and 5% by weight solid boron oxide and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Copper tailings thermally treated at 700 °C without the mechano-thermal activation aid did not harden after one day of curing. This showed that thermal treatment alone was unable to cause vitrification of the tailings sample.

### Example 7

SCM was prepared from aggregate fines. Aggregate fines were ground with 3% by weight solid sodium carbonate and 5% by weight solid boron oxide and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Aggregate fines thermally treated at 700 °C without the mechano-thermal activation aid did not harden after one day of curing. This showed that thermal treatment alone was unable to cause vitrification of the aggregate fines.

### Example 8

SCM was prepared from muscovite and/or illite. Muscovite and/or illite-rich clays were ground with 2% by weight solid sodium carbonate and 3% by weight solid boron oxide and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. The clays thermally treated at 700 °C without the mechanothermal activation aid did not harden after one day of curing. This showed that thermal treatment alone was unable to cause vitrification of the illite and/or muscovite clays.

### Example 9

SCM was prepared from muscovite and/or illite. Muscovite and/or illiterich clays were ground with 2% by weight solid sodium carbonate and 3% by weight solid borax and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. The clays thermally treated at 700 °C without the mechano-thermal activation aid did not harden after one day of curing. This showed that thermal treatment alone was unable to cause vitrification of the illite and/or muscovite clays.

### Example 10

SCM was prepared from muscovite and/or illite. Muscovite and/or illite-rich clays were ground with 5% by weight solid sodium carbonate and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. The clays thermally treated at 700 °C without the mechano-thermal activation aid did not harden after one day of curing. This showed that thermal treatment alone was unable to cause vitrification of the illite and/or muscovite clays.

### Example 11

SCM was prepared from recycled cement paste. Recycled cement paste was ground with 2% by weight solid sodium carbonate and 3% by weight solid boron oxide and thermally treated at 600 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled cement paste treated at 700 °C without the mechanothermal activation aid did not harden after one day of curing. This showed that thermal treatment alone was unable to cause vitrification of the recycled cement paste.

### Example 12

SCM was prepared from recycled cement paste. Recycled cement paste was ground with 2% by weight solid sodium carbonate and 3% by weight solid borax and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled cement paste treated at 700 °C without the mechano-thermal activation aid did not harden after one day of curing. This showed that thermal treatment alone was unable to cause vitrification of the recycled cement paste.

### Example 13

SCM was prepared from recycled cement paste. Recycled cement paste was ground with 2% by weight solid sodium carbonate and 2% by weight solid aluminum hydroxide and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled cement paste treated at 700 °C without the mechano-thermal activation aid did not harden after one day of curing. This showed that thermal treatment alone was unable to cause vitrification of the recycled cement paste.

### Example 14

SCM was prepared from recycled cement paste. Recycled cement paste was ground with 5% by weight barium carbonate and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled cement paste treated at 700 °C without the mechano-thermal activation aid did not harden after one day of curing. This showed that thermal treatment alone was unable to cause vitrification of the recycled cement paste.

### Example 15

SCM was prepared from recycled cement paste. Recycled cement paste was ground with 5% by weight sodium carbonate and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled cement paste treated at 700 °C without the mechano-thermal activation aid did not harden after one day of curing. This showed that thermal treatment alone was unable to cause vitrification of the recycled cement paste.

### Example 16

SCM was prepared from recycled concrete aggregate. Recycled concrete aggregate was ground with 3% by weight solid sodium carbonate and 5% by weight solid aluminum hydroxide and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled concrete aggregate treated at 800 °C without the mechano-thermal activation aid did not harden after one day of curing. This showed that thermal treatment alone was unable to cause vitrification of the recycled concrete aggregate.

### Example 17

SCM was prepared from recycled concrete aggregate. Recycled concrete aggregate was ground with 3% by weight solid sodium carbonate and 5% by weight solid boron oxide and thermally treated at 800 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled concrete aggregate treated at 800 °C without the mechano-thermal activation aid did not harden after one day of curing. This showed that thermal treatment alone was unable to cause vitrification of the recycled concrete aggregate.

### Example 18

SCM was prepared from recycled concrete aggregate. Recycled concrete aggregate was ground with 5% by weight solid sodium carbonate and 5% by weight solid boric acid and thermally treated at 800 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled concrete aggregate treated at 800 °C without the mechano-thermal activation aid did not harden after one day of curing. This showed that thermal treatment alone was unable to cause vitrification of the recycled concrete aggregate.

### Example 19

SCM was prepared from recycled concrete aggregate. Recycled concrete aggregate was ground with 10% by weight solid calcium oxide and 3% by weight solid boric acid and thermally treated at 800 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled concrete aggregate treated at 800 °C without the mechano-thermal activation aid did not harden after one day of curing. This showed that thermal treatment alone was unable to cause vitrification of the recycled concrete aggregate.

### Example 20

SCM was prepared from recycled concrete aggregate. Recycled concrete aggregate was ground with 10% by weight solid sodium carbonate and thermally treated at 700 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled concrete aggregate treated at 700 °C without the mechano-thermal activation aid did not harden after one day of curing. This showed that thermal treatment alone was unable to cause vitrification of the recycled concrete.

### Example 21

SCM was prepared from recycled concrete aggregate. Recycled concrete aggregate was ground with 10% by weight solid sodium carbonate and thermally treated at 700 °C for 1 hour. The material was then dispersed in water at a ratio of 3:2 (solids: liquid) with 0.1% polyacrylate dispersant and carbonated by bubbling CO₂ through the slurry for 1 hour. The carbonated slurry was then filtered and dried. The carbon dioxide uptake of the material measured through TGA was 6%. The carbonation step may also regenerate sodium carbonate. Additionally, presence of sodium carbonate catalyzes the reaction rate for carbon sequestration. The carbonated thermally activated materials were then ball milled to prepare SCM. The prepared SCM was mixed with calcium hydroxide and KOH solution as described above and cured at 50 °C for one day. The mixture hardened after one day showing cementitious activity. Recycled concrete aggregate treated at 700 °C without the mechanothermal activation aid did not harden after one day of curing. This showed that thermal treatment alone was unable to cause vitrification of the recycled concrete.

### Example 22

SCM was prepared from silica sand. Silica sand was ground with 3% by weight solid sodium carbonate and 5% by weight solid boron oxide and thermally treated at 700 °C and 800 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. The silica sand treated at 800 °C without the mechano-thermal activation aid did not harden after one day of curing. This showed that thermal treatment alone was unable to cause vitrification of the recycled concrete aggregate.

### Example 23

SCM was prepared from kaolinitic clays. Kaolinitic clays from Georgia, Spain, and Turkey were ground with 2% by weight solid potassium bifluoride and thermally treated at 450 °C for 1 hour. The thermally activated materials were then ball milled to prepare SCM. The prepared SCM was mixed with calcium hydroxide and KOH solution as described above and cured at 50 °C for one day. All of the samples strongly hardened after three hours showing cementitious activity. The kaolinitic clays without the mechano-thermal activation aid agent at 450 °C showed some degree of hardness after one day but did not exhibit strong bonding. This showed that use of mechano-thermal activation aid improved the extent of dehydroxylation.

### Example 24

SCM was prepared from kaolinite rich clays. Kaolinite rich clays were ground with 3% by weight solid sodium silicate and 0.25% ascorbic acid as a reducing agent and thermally treated at 500 °C for 1 hour in a CO₂ environment. The thermally activated materials were then ball milled to prepare SCM. The prepared SCM was mixed with calcium hydroxide and KOH solution as described above and cured at 50 °C for one day. All of the samples strongly hardened after three hours showing cementitious activity. The kaolinitic clays without the mechano-thermal activation aid agent at 500 °C showed some degree of hardness after one day but did not exhibit strong bonding. This showed that use of mechano-thermal activation aid improved the extent of dehydroxylation.

### Example 25

SCM was prepared from mature fine tailings. Mature fine tailings from oil sands were ground with 3% by weight solid sodium carbonate and thermally treated at 450 °C, 500 °C, and 550 °C, respectively, for 1 hour. The thermally activated materials were then ball milled to prepare SCM. The prepared SCM was mixed with calcium hydroxide and KOH solution as described above and cured at 50 °C for one day. All the samples hardened after one day showing cementitious activity. The oil sand clays without the mechano-thermal activation aid at 550 °C showed some degree of hardness after one day but did not exhibit strong bonding. This showed that use of the mechano-thermal activation aid improved the extent of dehydroxylation.

### Example 26

SCM was prepared from bedding sand. Bedding sand (a mix of sand and clays) was ground with 3% by weight solid sodium carbonate and 5% by weight solid boron oxide and thermally treated at 800 °C for 1 hour. The thermally activated materials were then ball milled to prepare SCM. The prepared SCM was mixed with calcium hydroxide and KOH solution as described above and cured at 50 °C for one day. The mixture hardened after one day showing cementitious activity. The silica sand treated at 800 °C without the mechanothermal activation aid did not harden after one day of curing. This showed that thermal treatment alone was unable to cause vitrification of the recycled concrete aggregate.

### Example 27

Prepared SCM was ground and/or milled in a CO₂ atmosphere for carbonation of the minerals. Specifically, recycled concrete aggregate was ground with 10% by weight solid calcium oxide and 3% boric acid and thermally treated at 800 °C for 1 hour. The thermally activated recycled concrete aggregate was then ball milled in CO₂ atmosphere (10 psi pressure) by purging to prepare SCM and capture CO₂. The prepared SCM was mixed with calcium hydroxide and KOH solution as described above and cured at 50 °C for one day.

The mixture hardened after one day showing cementitious activity.

### Example 28

SCM was prepared from nickel and copper tailings. Nickel and copper tailings were ground with 10% by weight solid sodium carbonate and thermally treated at 700 °C for one hour. The thermally activated materials were then ball milled to prepare SCM. The prepared SCM was mixed with calcium hydroxide and KOH solution as described above and cured at 50 °C for one day. The mixture hardened after one day showing cementitious activity.

### Example 29

SCM was prepared from oil shale ash. Oil shale ash was grounded with 5% by weight solid barium carbonate and thermally treated at 500 °C for one hour. The thermally activated materials were then ball milled to prepare SCM. The prepared SCM was mixed with calcium hydroxide and KOH solution as described above and cured at 50 °C for one day. The mixture hardened after one day showing cementitious activity.

### Example 30

SCM was prepared from bottom ash. Bottom ash was grounded with 3% by weight solid sodium carbonate and thermally treated at 400 °C for one hour. The thermally activated materials were carbonated for one hour with 0.1% polyacrylate dispersant at a solid/liquid ratio of 7:3 and dried. Additionally, presence of sodium carbonate catalyzes the reaction rate for carbon sequestration. Dried materials were then ball milled to prepare SCM. The prepared SCM was mixed with calcium hydroxide and KOH solution as described above and cured at 50 °C for one day. The mixture hardened after one day showing cementitious activity.

### Example 31

SCM was prepared from recycled concrete aggregate. Recycled concrete aggregate was ground with 3% by weight solid sodium carbonate and 5% by weight saw dust as a source of biomass and thermally treated at 700 °C for one hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled concrete aggregate treated at 700 °C without the mechano-thermal activation aid did not harden after one day of curing. This showed that thermal treatment alone was unable to cause vitrification of the recycled concrete aggregate.

### Example 32

SCM was prepared from recycled concrete aggregate. Recycled concrete aggregate was ground with 3% by weight solid sodium carbonate and 5% by weight saw dust as a source of biomass. The material was then pelletized by spraying water and pelletized using baffle mixer. The pelletized feed was then thermally treated at 700 °C for one hour. The thermally activated materials were then ball milled to prepare SCM. The prepared SCM was mixed with calcium hydroxide and KOH solution as described above and cured at 50 °C for one day. The mixture hardened after one day showing cementitious activity. Recycled concrete aggregate treated at 700 °C without the mechano-thermal activation aid did not harden after one day of curing. This showed that thermal treatment alone was unable to cause vitrification of the recycled concrete aggregate.

### Example 33

SCM was prepared from recycled concrete fines. Recycled concrete aggregate was ground with 3% by weight solid sodium carbonate and 5% by weight saw dust as a source of biomass. and thermally treated at 700 °C in an electrically heated rotary kiln of 1.7 m length (heated zone 0.9 m) and diameter of 0.1 m at an inclination of 1.5° and RPM of 1 resulting in a residence time of 45 mins in the hot zone. The thermally activated materials were then pulverized in a grinder to produce 300 mesh product as SCM. The prepared SCM was mixed with calcium hydroxide and KOH solution as described above and cured at 50 °C for one day. The mixture hardened after one day showing cementitious activity. Recycled concrete aggregate treated at 700 °C without the mechano-thermal activation aid did not harden after one day of curing. This showed that thermal treatment alone was unable to cause vitrification of the recycled concrete aggregate.

### Example 34

SCM was prepared from kaolinitic rich clays. Clays were ground with 3% by weight solid sodium carbonate and 5% by weight saw dust as a source of biomass and thermally treated at 550 °C for one hour. The thermally activated materials were then ball milled to prepare SCM. Mortar blocks were prepared with the activated clays. The SAI after 28 days was 107%. Similarly, control clay samples were calcined at 750 °C for one hour for comparison as conventional thermally treated kaolinitic clays. The SAI for the prepared mortar after 18 days was 106%. This showed that kaolinitic clays can be activated at lower temperatures with the addition of sodium carbonate and sawdust.

The preceding examples can be repeated with similar success by substituting the generically or specifically described reactants and/or operating conditions of this invention for those used in the preceding examples.

Note that in the specification and claims, "about" or "approximately" means within twenty percent (20%) of the numerical amount cited. The terms, "a", "an", "the", and "said" mean "one or more" unless context explicitly dictates otherwise.

Although the invention has been described in detail with particular reference to these embodiments, other embodiments can achieve the same results. Variations and modifications of the present invention will be obvious to those skilled in the art and it is intended to cover in the appended claims all such modifications and equivalents. The entire disclosures of all references, applications, patents, and publications cited above are hereby incorporated by reference.

## Claims

1. A method for producing supplementary cementitious material, the method comprising:
contacting an input stream comprising a lattice with a mechano-thermal activation aid;
thermally treating the input stream to form a thermally treated input stream; sequestering an ion;
disrupting the input stream lattice; and
cooling the thermally treated input stream.

2. The method of claim 1 further comprising an oxidizing environment.

3. The method of claim 1 further comprising a reducing environment.

4. The method of claim 1 further comprising an inert environment.

5. The method of claim 1 further comprising carbonating the thermally treated input stream.

6. The method of claim 1 further comprising co-grinding the input stream and the mechano-thermal activation aid.

7. The method of claim 1 further comprising pelletizing the input stream and the mechano-thermal activation aid.

8. The method of claim 1 further comprising milling the thermally treated input stream.

9. The method of claim 1 further comprising reducing a vitrification temperature.

10. The method of claim 1 wherein the mechano-thermal activation aid comprises a biomass.

11. The method of claim 10 further comprising pyrolyzing the biomass.

12. The method of claim 1 wherein the input stream comprises an aluminosilicate.

13. The method of claim 1 wherein the ion comprises an alkali metal ion.

14. The method of claim 1 wherein the ion comprises an alkaline earth metal ion.

15. The method of claim 12 further comprising contacting the aluminosilicate with an alkali metal ion.

16. The method of claim 12 further comprising contacting the aluminosilicate with an alkaline earth metal ion.

17. The method of claim 1 wherein thermally treating comprises heating the input stream and mechanothermal activation aid to a temperature of about 400 °C to about 1000 °C.

18. The method of claim 1 wherein the input stream comprises recycled concrete aggregate.

19. The method of claim 1 wherein the input stream comprises kaolinite rich clay.

20. The method of claim 1 wherein the input stream comprises recycled concrete fines.
